(19) Europäisches Patentamt / European Patent Office / Office européen des brevets

(11) **EP 2 445 341 B1**

(12) **EUROPEAN PATENT SPECIFICATION**

(45) Date of publication and mention of the grant of the patent:
**03.05.2017 Bulletin 2017/18**

(21) Application number: **10724875.9**

(22) Date of filing: **24.06.2010**

(51) Int Cl.:
*A01N 37/40* (2006.01)      *A01N 47/24* (2006.01)
*A01N 57/20* (2006.01)      *A01N 43/42* (2006.01)

(86) International application number:
**PCT/EP2010/058977**

(87) International publication number:
**WO 2010/149732 (29.12.2010 Gazette 2010/52)**

(54) **USE OF AGROCHEMICAL MIXTURES FOR INCREASING THE HEALTH OF A PLANT**

VERWENDUNG VON AGROCHEMISCHEN MISCHUNGEN ZUR VERBESSERUNG DER GESUNDHEIT EINER PFLANZE

UTILISATION DE MÉLANGES AGROCHIMIQUES POUR AUGMENTER LA SANTÉ D'UNE PLANTE

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(30) Priority: **25.06.2009 US 220216 P**
**09.03.2010 US 311794 P**

(43) Date of publication of application:
**02.05.2012 Bulletin 2012/18**

(60) Divisional application:
**17158148.1**

(73) Proprietor: **BASF SE**
**67056 Ludwigshafen am Rhein (DE)**

(72) Inventors:
 • **GEWEHR, Markus**
 **56288 Kastellaun (DE)**
 • **GLADWIN, Robert John**
 **Macclesfield SK10 2WD (GB)**
 • **BRAHM, Lutz**
 **67551 Worms (DE)**
 • **HADEN, Egon**
 **67061 Ludwigshafen (DE)**
 • **TAVARES-RODRIGUES, Marco-Antonio**
 **04317-180 Jabaquara - Sao Paulo - Sao Paulo (BR)**
 • **PEOPLES, Scott**
 **Raleigh**
 **North Carolina 27606 (US)**
 • **SEBASTIAN, Deneen B.**
 **Duham**
 **NC 27713 (US)**
 • **REPAGE, Ronald**
 **69190 Walldorf (DE)**

(74) Representative: **BASF IP Association**
**BASF SE**
**ZRX-C6**
**67056 Ludwigshafen (DE)**

(56) References cited:
**WO-A1-98/41094          WO-A1-2004/043150**
**WO-A1-2007/001919    WO-A2-2008/048964**
**WO-A2-2009/098188**

Remarks:
The file contains technical information submitted after the application was filed and not included in this specification

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

The present invention relates to the use of a mixture comprising, as active compounds a herbicide being dicamba (compound I) and a fungicide being pyraclostrobin (com pound II), or

a herbicide being quinmerac (compound I) and a fungicide being pyraclostrobin (compound II)

for synergistically increasing the health of a plant for increased yield and/or the quality of a plant or its product.

In addition, the current invention relates to the use of a mixture as described above, wherein the mixture additionally comprises a second herbicide (compound III) selected from glyphosate and glufosinate.

The application of these mixtures to transgenic plants which are resistant to at least one of the abovementioned herbicides is especially preferred.

Within the scope of the invention, the health of a plant according to claim 1 is increased synergistically. The term "synergistically increasing the health of a plant" or "synergistically effective amounts" refers to the fact that the purely additive effect (in mathematical terms) of the application of the individual compounds is surpassed by the application of the mixture according to the invention. The synergistic increase of the health of a plant is more than surprising, since it can be assumed that fungicides and herbicides have completely different mode of actions.

The present disclosure also relates to a method for synergistically increasing the health of a plant, wherein the plant, the locus where the plant is growing or is expected to grow or plant propagation material from which the plant grows is treated with a synergistically effective amount of a mixture as defined above.

The present disclosure especially relates to a method for increasing the yield of a plant, wherein the plant, the locus where the plant is growing or is expected to grow or plant propagation material from which the plant grows is treated with an effective amount of a mixture as defined above.

Methods for generating plants which are resistant to the effect of glyphosate are described in the literature (EP-A 218 571, EP-A 293 358, WO-A 92/00377 and WO-A 92/04449). Chemical Abstracts, 123, No. 21 (1995) A.N. 281158c describes the generation of glyphosate-resistant soybean plants. Other glyphosate-resistant plants can be generated in a similar manner.

It is known from the literature that strobilurins are capable of bringing about increased yields in crop plants in addition to their fungicidal action (Koehle H. et al. in Gesunde Pflanzen 49 (1997), pages 267-271; Glaab J. et al. Planta 207 (1999), 442-448)).

WO 1997/36488 discloses that the application of glyphosate derivatives in glyphosate tolerant plants selected from the group consisting of sugar beet, fodder beet, maize, oilseed rape and cotton may bring about increased yields. Furthermore, it is known from U.S. Pat. No. 3,988,142 that the sublethal application of glyphosate in plants such as sugar cane increases starch and sugar production and thus the overall yield of the plant.

WO 1998/41094 relates to fungicidal mixtures containing a) a fungicide and b) the herbicide active agent II (dicamba) and/or the herbicide active agent III (diflufenzopyr) as well as to methods for producing said mixtures and their use for combatting harmful fungi in the area of plant and material protection.

WO 2004/1043150 relates to a method for increasing the yield in glyphosate-resistant legumes, which comprises treating the plants or the seed with a mixture comprising a strobilurine compound and a glyphosate derivate in synergistically active amounts.

Lancaster et al., 2005 found that the application of 2,4-DB in a mixture with selected fungicides or certain insecticides, has no negative effect on sicklepod (*Senna obtusifolio*) control compared to the application of 2,4-DB alone (Lancaster et al. (2005): Weed Technology 19: 451-455).

US 2006/111239 discloses mixtures of pyraclostrobin and glyphosate in modified leguminoses. Combinations of pyraclostrobin with dicamba are not mentioned therein. WO 2008/048964 relates to methods for improving plant health by application of dicamba and/or metabolites or analogs thereof to plants.

Methods of improving plant health by application of dicamba are also disclosed in US 2009/0105077.

WO 2009/098188 relates to compositions and methods for controlling phytpathogenic fungi and/or improving the health of a plant, in particular by seed treatment using a combination of pyraclostrobn and a plant growth regulator.

WO 2009/126462 provides methods and compositions for improving plant health, increasing the germination rate of seed, and producing doubled hapoid tissue by the application of dicamba or another substrate of DMO (dicamba monooxygenase) or metabolites thereof to a plant. Such application may be combined with the application of another herbicide such as glyphosate, and may improve plant tolerance to yellow flash which is a symptom observed in glyphosate tolerant soybeans treated with glyphosate.

None of these references, however, disclose the synergistic effects of the mixtures as defined at the outset.

In crop protection, there is a continuous need for compositions that improve the health of plants. Healthier plants are desirable since they result among others in better yields and/or a better quality of the plants or crops. Healthier plants also better resist to biotic and/or abiotic stress. A high resistance against biotic stresses in turn allows the person skilled in the art to reduce the quantity of pesticides applied and consequently to slow down the development of resistances against the respective pesticides.

According to the FAO (2004), population will continue to grow from currently 6,07 billion to 8,9 billion in 2050. Highest growth rates are expected in the developing countries. Obviously, the more people there are on Earth, the more resources are needed to meet their basic needs such as food and water. The United Nations Organization has pointed out that the food production has to nearly double to feed the expected global population. Even though there has been an impressive growth in food production during the last decades, which can mainly be attributed to the development of improved, disease-resistant varieties of staple crops and the increased use of chemical fertilizers and pesticides, the food production does not keep up with the rapid population growth. One of the most severe consequences is the expansion of arable land by cutting down forests or by irrigating cropland with salty water leading to salinization of the soils and widespread land degradation. Such inappropriate farming practices may impoverish and erode the soil; reduce vegetation and result in over-use and improperly use of agrochemicals. As a result, less arable and productive land is available. Taking climatic changes into account, it must additionally be expected that the yield will decline in many areas of the world due to adverse weather conditions. With respect to the growing world population, the increase of crop yield must be regarded as a global challenge.

Besides the growing world population which directly leads to an increased food and energy requirement, the growing wealth results in an increased meat consumption and consequently to an increase in feed demand. In addition, quality issues become more and more important. It is known that the food quality is regarded by many consumers as the most important parameter. Various parameters determine the food quality. Besides genetic aspects, the cropping system including the optimal nutrition as well as the protection against abiotic and biotic stress factors can alter the overall quality of plants and their products as an indicator of plant health to a substantial extent. Complying with the quality standards and at the same time to remain competitive at the market, ecologically sound and economically viable production methods are essential to the farmer.

It was therefore an object of the present invention to provide the use of a pesticidal composition which solves the problems outlined above, and which should, in particular, improve the health of plants, in particular the yield and/or quality of plants.

We have found that these objects are in part or in whole achieved by using the mixtures as defined in the outset. Accordingly, a preferred embodiment of the invention is the use of a mixture as defined at the outset for synergistically increasing the health of a plant for increased yield and/or the quality of a plant or its product, wherein compound (I) is dicamba or quinmerac and compound (II) is pyraclostrobin.

A more preferred embodiment of the invention is the use of a mixture as defined at the outset for synergistically increasing the health of a plant for increased yield and/or the quality of a plant or its product, wherein compound (I) is dicamba.

A preferred embodiment of the invention is the use of a mixture as defined at the outset for synergistically increasing the health of a plant for increased yield and/or the quality of a plant or its product, wherein the mixture additionally comprises a second herbicide (compound III) selected from glyphosate and glufosinate.

A more preferred embodiment of the invention is the use of a mixture as defined at the outset for synergistically increasing the health of a plant for increased yield and/or the quality of a plant or its product, wherein the mixture additionally comprises glyphosate as a second herbicide (compound III).

An especially preferred embodiment of the invention is the use of a mixture as defined at the outset for synergistically increasing the health of a plant for increased yield and/or the quality of a plant or its product, wherein compound (I) is dicamba, compound (II) is pyraclostrobin and compound (III) glyphosate.

One preferred embodiment of the invention is the use of the following secondary mixtures (M) listed in table 1 comprising one compound (I) and one compound (II) for synergistically increasing the health of a plant for increased yield and/or the quality of a plant or its product, wherein compound (I) is either dicamba (I-4) or quinmerac (I-10) and wherein compound (II) is pyraclostrobin (II-2):

Table 1: Secondary mixtures (M)

| M | (I) | (II) |
|------|--------|--------|
| M-23 | (I-4) | (II-2) |
| M-65 | (I-10) | (II-2) |

The following mixtures are especially preferred: M-23 and M-65.

Most preference is given to mixture M-23.

Another preferred embodiment of the invention is the use of the following ternary mixtures (N) listed in table 2 comprising one compound (I), one compound (II) and one compound (III) for synergistically increasing the health of a plant for increased yield and/or the quality of a plant or its product, wherein compound (I) is selected from dicamba (I-4) or quinmerac (I-10) and wherein compound (II) is pyraclostrobin (II-2) and wherein compound (III) is glyphosate (III-1) or glufosinate (III-2):

Table 2: Ternary mixtures (N)

| N | (I) | (II) | (III) |
|---|---|---|---|
| N-45 | (I-4) | (II-2) | (III-1) |
| N-46 | (I-4) | (II-2) | (III-2) |
| N-129 | (I-10) | (II-2) | (III-1) |
| N-130 | (I-10) | (II-2) | (III-2) |

Within the mixtures of table 2, the following mixtures are especially preferred: N-45, N-46, N-129 and N-130.

The following mixtures are most preferred: N-45, and N-129.

Utmost preference is given to mixture N-45.

With respect to their intended use in the methods of the present disclosure, the binary mixtures listed in table 1 above, comprising one compound (I) and one compound (II) as well as the ternary mixtures listed in table 2 additionally comprising one compound (III) are a preferred embodiment of the present invention.

In the context of the present disclosure, the application relates to a method for improving the health of plants, wherein the plant, the locus where the plant is growing or is expected to grow or plant propagation material from which the plant grows is treated with an effective amount of a mixture comprising, as active compounds
a herbicide being dicamba (compound I) and a fungicide being pyraclostrobin (compound II), or
a herbicide being quinmerac (compound I) and a fungicide being pyraclostrobin (compound II)
in synergistically effective amounts.

In another embodiment of the method according to the disclosure, the mixture additionally comprises a second herbicide (compound III) selected from glyphosate and glufosinate.
We have found that simultaneous, that is joint or separate, application of the compound (I) and the compound (II) and optionally compound (III) or successive application of compound (I) and compound (II) and optionally compound (III) provides a stronger increase of the health of a plant compared to the application of each individual compound alone, in particular enhanced yield effects compared to the yield effects that are possible with the individual compounds applied alone (synergistic effect).
All embodiments of the mixtures set forth above (including the respective preferences as set forth above) are hereinbelow referred to as "inventive mixture".
The compounds (I), (II) and (III) as well as their pesticidal action and methods for producing them are generally known. For instance, the commercially available compounds can be found in "The Pesticide Manual, 14th Edition, British Crop Protection Council (2006)" among other publications.

In a preferred embodiment of the invention, the mixtures used for increasing the health of a plant, comprise the agriculturally acceptable salts and esters of the respective compounds.
Suitable salts of dicamba include those salts of dicamba, where the counterion is an agriculturally acceptable cation. Suitable examples of such salts are dicamba-sodium, dicamba-potassium, dicamba-methylammonium, dicamba-dimethylammonium, dicamba-isopropylammonium, dicamba-diglycolamine, dicamba-olamine, dicamba-diolamine and dicamba-trolamine. Examples of a suitable ester are dicamba-methyl and dicamba-butoyl..

Suitable salts of glyphosate include those salts of glyphosate, where the counterion is an agriculturally acceptable cation. Suitable examples of such salts are glyphosate-ammonium, glyphosate-diammonium, glyphoste-dimethylammonium, glyphosate-isopropylammonium, glyphosate-potassium, glyphosate-sodium, glyphosate-trimesium as well as the ethanolamine and diethanolamine salts.

Suitable salts of glufosinate include those salts of glufosinate, where the counterion is an agriculturally acceptable cation. Suitable examples of such salts are glufosinate-ammonium and glufosinate-P.

The inventive mixtures can further contain one or more insecticides, fungicides, herbicides and plant growth regulators.

Thus, the present disclosure relates to a method for improving the health of plants,
wherein the plant, the locus where the plant is growing or is expected to grow or plant propagation material from which the plant grows is treated with an effective amount of a mixture according to the invention sufficient to increase the health of a plant in a synergistic manner.

Preferably, the present disclosure relates to a method for increasing the yield of a plant, wherein the plant, the locus where the plant is growing or is expected to grow or plant propagation material from which the plant grows is treated with an effective amount of a mixture according to the invention.

In an especially preferred embodiment, the ternary mixture used for synergistically increasing the health of a

4

plant for increased yield and/or the quality of a plant or its product comprises dicamba as compound (I), pyraclostrobin as compound (II) and glyphosate as compound (III).

In an especially preferred embodiment, the ternary mixture used for synergistically improving the health of a plant for increased yield and/or the quality of a plant or its product comprises dicamba as compound (I), pyraclostrobin as compound (II) and glufosinate as compound (III).

More preferably, the present disclosure relates to a method of increasing the health of a plant by treating plants, parts of such plants or at their locus of growth with an inventive mixture.

The present disclosure also relates to a method of increasing the yield of plants by treating plants, parts of such plants or at their locus of growth with compound (I) and plant propagation materials, preferably seeds with compound (II).

The remarks as to preferred mixtures comprising compounds selected from the groups consisting of compounds (I), (II) and (III), to their preferred use and methods of using them are to be understood either each on their own or preferably in combination with each other.

In the terms of the present invention "mixture" is not restricted to a physical mixture comprising one compound (I) and compound (II) and optionally one compound (III) but refers to any preparation form of one compound (I) and compound (II) and optionally one compound (III), the use of which is time- and locus-related.

In one embodiment of the invention "mixture" refers to a binary mixture comprising one compound (I) and compound (II).

In another embodiment of the invention, "mixture" refers to a ternary mixture comprising one compound (I) and compound (II) and one compound (III).

In another embodiment of the invention, "mixture" refers to one compound (I) and compound (II) and optionally one compound (III) formulated separately but applied to the same plant, plant propagule or locus in a temporal relationship, i.e. simultaneously or subsequently, the subsequent application having a time interval which allows a combined action of the compounds.

In another embodiment of the invention, one compound (I) and compound (II) and optionally one compound (III) are applied simultaneously, either as a mixture or separately, or subsequently to plant propagules.

In a preferred embodiment of the invention, one compound (I) and compound (II) and optionally one compound (III) are applied simultaneously, either as a mixture or separately, as foliar spray treatment.

Furthermore, the individual compounds of the mixtures according to the present disclosure such as parts of a kit or parts of the binary or ternary mixture may be mixed by the user himself in a spray tank and further auxiliaries may be added if appropriate (tank mix). "Plant health" is intended to mean a condition of the plant which is determined by several aspects alone or in combination with each other. For example, advantageous properties that may be mentioned are improved crop characteristics including: emergence, protein content, oil content, starch content, more developed root system (improved root growth), improved stress tolerance (e.g. against drought, heat, salt, UV, water, cold), reduced ethylene (reduced production and/or inhibition of reception), tillering increase, increase in plant height, bigger leaf blade, less dead basal leaves, stronger tillers, greener leaf color, pigment content, photosynthetic activity, less input needed (such as fertilizers or water), less plant propagation materials (preferably seeds) needed, more productive tillers, earlier flowering, early grain maturity, less plant verse (lodging), increased shoot growth, enhanced plant vigor, increased plant stand and early and better germination, yield; or any other advantages familiar to a person skilled in the art.

For the present invention, a particular important aspect of plant health is yield. Yield is is crop and/or fruit yield. "Crop" and "fruit" are to be understood as any plant product which is further utilized after harvesting, e.g. fruits in the proper sense, vegetables, nuts, grains, seeds, wood (e.g. in the case of silviculture plants), flowers (e.g. in the case of gardening plants, ornamentals) etc., that is anything of economic value that is produced by the plant.

In a preferred embodiment, the term yield refers to fruits in the proper sense, vegetables, nuts, grains and seeds.

The term "plants" generally comprises all plants of economic importance and/or men-grown plants. They are preferably selected from agricultural, silvicultural and ornamental plants, more preferably agricultural plants and silvicultural plants, utmost preferably agricultural plants. The term "plant (or plants)" is a synonym of the term "crop" which is to be understood as a plant of economic importance and/or a men-grown plant. The term "plant" as used herein includes all parts of a plant such as germinating seeds, emerging seedlings, herbaceous vegetation as well as established woody plants including all belowground portions (such as the roots) and aboveground portions.

The plants to be treated according to the invention are selected from the group consisting of agricultural, silvicultural, ornamental and horticultural plants, each in its natural or genetically modified form, more preferably from agricultural plants.

The aforementioned methods for increasing the health of a plant comprises treating the plant propagules, preferably the seeds of an agricultural, horticultural, ornamental or silivcultural plant selected from the group consisting of transgenic or non-transgenic plants with a mixture according to the present invention.

The plant to be treated according to the method of the disclosure is an agricultural plant. Agricultural plants are plants of which a part or all is harvested or cultivated on a commercial scale or which serve as an important source of feed, food, fibres (e.g. cotton, linen), combustibles (e.g. wood, bioethanol, biodiesel, biomass) or other chemical compounds. Agricultural plants also horticultural plants, i.e. plants grown in gardens (and not on fields), such as certain fruits and vegetables. Preferred agricultural plants are for example cereals, e.g. wheat, rye, barley, triticale, oats, sorghum or rice; beet, e.g. sugar beet or fodder beet; fruits, such as pomes, stone fruits or soft fruits, e.g. apples, pears, plums, peaches, almonds, cherries, strawberries, raspberries, blackberries or gooseberries; leguminous plants, such as lentils, peas, alfalfa or soybeans; oil plants, such as rape, oil-seed rape, canola, juncea (*Brassica juncea*), linseed, mustard, olives, sunflowers, coconut, cocoa beans, castor oil plants, oil palms, ground nuts or soybeans; cucurbits, such as squashes, cucumber or melons; fiber plants, such as cotton, flax, hemp or jute; citrus fruit, such as oranges, lemons, grapefruits or mandarins; vegetables, such as spinach, lettuce, asparagus, cabbages, carrots, onions, tomatoes, potatoes, cucurbits or paprika; lauraceous plants, such as avocados, cinnamon or camphor; energy and raw material plants, such as corn, soybean, rape, canola, sugar cane or oil palm; corn; tobacco; nuts; coffee; tea; bananas; vines (table grapes and grape juice grape vines); hop; turf; natural rubber plants or ornamental and forestry plants, such as flowers, shrubs, broad-leaved trees or evergreens, e.g. conifers; and on the plant propagation material, such as seeds, and the crop material of these plants.

More preferred agricultural plants are field crops, such as potatoes, sugar beets, cereals such as wheat, rye, barley, triticale, oats, sorghum, rice, corn, cotton, rape, sunflowers, oilseed rape, juncea and canola, legumes such as soybeans, peas and beans (fieldbeans), lentil, sugar cane, turf; ornamentals; or vegetables, such as cucumbers, tomatoes, or onions, leeks, lettuce, squashes, alfalfa, clover most preferred agricultural plants are potatoes, beans (fieldbeans), alfalfa, sugar cane, turf, sugar beets, cereals such as wheat, rye, triticale, barley, oats, sorghum, rice, corn, cotton, soybeans, oilseed rape, canola, juncea, sunflower, sugar cane, peas, lentils and alfalfa and utmost preferred plants are selected from soybean, wheat, sunflowers, canola, juncea, corn, cotton, sugar cane, peas, lentils and alfalfa and oilseed rape.

In another preferred embodiment of the present invention, the plants to be treated are selected from cucumber, soybean, wheat, sunflower, canola, oilseed rape, corn, cotton, sugar cane, juncea, peas, lentils and alfalfa. The utmost preferred plant is soybean.

In an especially preferred embodiment of the present invention, the plants to be treated are selected from cucumber, wheat, barley, corn, soybean, rice, canola and sunflower.

In another especially preferred embodiment of the present invention, the plants to be treated are selected from soybean, corn, cotton, canola, sugar cane, barley, oats, sorghum and wheat.

The plant to be treated according to the method of the disclosure can be a horticultural plant. The term "horticultural plants" are to be understood as plants which are commonly used in horticulture - e.g. the cultivation of ornamentals, vegetables and/or fruits. Examples for ornamentals are turf, geranium, pelargonia, petunia, begonia and fuchsia. Examples for vegetables are potatoes, tomatoes, peppers, cucurbits, cucumbers, melons, watermelons, garlic, onions, carrots, cabbage, beans, peas and lettuce and more preferably from tomatoes, onions, peas and lettuce. Examples for fruits are apples, pears, cherries, strawberry, citrus, peaches, apricots and blueberries.

The plant to be treated according to the method of the disclosure can be an ornamental plant. "Ornamental plants" are plants which are commonly used in gardening, e.g. in parks, gardens and on balconies. Examples are turf, geranium, pelargonia, petunia, begonia and fuchsia.

The plant to be treated according to the method of the disclosure can be a silvicultural plants. The term "silvicultural plant" is to be understood as trees, more specifically trees used in reforestation or industrial plantations. Industrial plantations generally serve for the commercial production of forest products, such as wood, pulp, paper, rubber tree, Christmas trees, or young trees for gardening purposes. Examples for silvicultural plants are conifers, like pines, in particular *Pinus* spec., fir and spruce, eucalyptus, tropical trees like teak, rubber tree, oil palm, willow (Salix), in particular *Salix* spec., poplar (cottonwood), in particular *Populus* spec., beech, in particular *Fagus* spec., birch, oil palm and oak.

In a preferred embodiment of the invention, the plant to be treated is a herbicide tolerant plant. Within the herbicide tolerant plants, dicamba tolerant plants, glyphosate tolerant plants and/or glufosinate tolerant plants are especially preferred.

The term "locus" is to be understood as any type of environment, soil, area or material where the plant is growing or intended to grow as well as the environmental conditions (such as temperature, water availability, radiation) that have an influence on the growth and development of the plant and/or its propagules.

In the terms of the present invention "mixture" means a combination of at least two active ingredients (compounds). In the present case, a mixture used for increasing the health of a plant comprises one compound (I) and compound (II) or one compound (I) and compound (II) and one compound (III).

The term "genetically modified plants" is to be understood as plants, which genetic material has been modified by the use of recombinant DNA techniques in a way that under natural circumstances it cannot readily be obtained by cross breeding, mutations or natural recombination.

The term "plant propagation material" is to be understood to denote all the generative parts of the plant such as seeds and vegetative plant material such as cuttings and tubers (e.g. potatoes), which can be used for the multiplication of the plant. This includes seeds, grains, roots, fruits, tubers, bulbs, rhizomes, cuttings, spores, offshoots, shoots, sprouts and other parts of plants, including seedlings and young plants, which are to be transplanted after germination or after emergence from soil, meristem tissues, single and multiple plant cells and any other plant tissue from which a complete plant can be obtained.

The term "propagules" or "plant propagules" is to be understood to denote any structure with the capacity to give rise to a new plant, e.g. a seed, a spore, or a part of the vegetative body capable of independent growth if detached from the parent. In a preferred embodiment, the term "propagules" or "plant propagules" denotes for seed.

The term "synergistically" means that the purely additive increasing effects of a simultaneous, that is joint or separate application of one compound (I) and one compound (II) and optionally one compound (III), or the successive application of one compound (I) and one compound (II) and optionally one compound (III), is surpassed by the application of a mixture according to the invention.

The term "health of a plant" or "plant health" is defined as a condition of the plant and/or its products which is determined by several aspects alone or in combination with each other such as yield, plant vigor, quality and tolerance to abiotic and/or biotic stress.

The above identified indicators for the health condition of a plant may be interdependent or they may result from each other.

One indicator for the condition of the plant is the yield. "Yield" is to be understood as any plant product of economic value that is produced by the plant such as grains, fruits in the proper sense, vegetables, nuts, grains, seeds, wood (e.g. in the case of silviculture plants) or even flowers (e.g. in the case of gardening plants, ornamentals). The plant products may in addition be further utilized and/or processed after harvesting.

According to the present invention, "increased yield" of a plant, in particular of an agricultural, silvicultural and/or horticultural plant means that the yield of a product of the respective plant is increased by a measurable amount over the yield of the same product of the plant produced under the same conditions, but without the application of the mixture according to the present disclosure. Increased yield can be characterized, among others, by the following improved properties of the plant:

- increased plant weight
- increased plant height
- increased biomass such as higher overall fresh weight (FW)
- increased number of flowers per plant
- higher grain yield
- more tillers or side shoots (branches)
- larger leaves
- increased shoot growth
- increased protein content
- increased oil content
- increased starch content
- increased pigment content

According to the present invention, the yield is increased by at least 4 %, preferable by 5 to 10 %, more preferable by 10 to 20 %, or even 20 to 30 %. In general, the yield increase may even be higher.

Another indicator for the condition of the plant is the plant vigor. The plant vigor becomes manifest in several aspects such as the general visual appearance.

Improved plant vigor can be characterized, among others, by the following improved properties of the plant:

- improved vitality of the plant
- improved plant growth
- improved plant development
- improved visual appearance
- improved plant stand (less plant verse/lodging)
- improved emergence
- enhanced root growth and/or more developed root system
- enhanced nodulation, in particular rhizobial nodulation
- bigger leaf blade
- bigger size
- increased plant weight
- increased plant height
- increased tiller number

- increased number of side shoots
- increased number of flowers per plant
- increased shoot growth
- increased root growth (extensive root system)
- increased yield when grown on poor soils or unfavorable climate
- enhanced photosynthetic activity (e.g. based on increased stomatal conductance and/or increased $CO_2$ assimilation rate)
- increased stomatal conductance
- increased $CO_2$ assimilation rate
- enhanced pigment content (e.g. chlorophyll content)
- earlier flowering
- earlier fruiting
- earlier and improved germination
- earlier grain maturity
- improved self-defence mechanisms
- improved stress tolerance and resistance of the plants against biotic and abiotic stress factors such as fungi, bacteria, viruses, insects, heat stress, cold stress, drought stress, UV stress and/or salt stress
- less non-productive tillers
- less dead basal leaves
- less input needed (such as fertilizers or water)
- greener leaves
- complete maturation under shortened vegetation periods
- less fertilizers needed
- less seeds needed
- easier harvesting
- faster and more uniform ripening
- longer shelf-life
- longer panicles
- delay of senescence
- stronger and/or more productive tillers
- better extractability of ingredients
- improved quality of seeds (for being seeded in the following seasons for seed production)
- reduced production of ethylene and/or the inhibition of its reception by the plant.

The improvement of the plant vigor according to the present application particularly means that the improvement of any one or several or all of the above mentioned plant characteristics are improved independently of the pesticidal action of the mixture or active ingredients (components).

Another indicator for the condition of the plant is the "quality" of a plant and/or its products. According to the present invention, enhanced quality means that certain plant characteristics such as the content or composition of certain ingredients are increased or improved by a measurable or noticeable amount over the same factor of the plant produced under the same conditions, but without the application of the mixtures of the present invention. Enhanced quality can be characterized, among others, by following improved properties of the plant or its product:

- increased nutrient content
- increased protein content
- increased content of fatty acids
- increased metabolite content
- increased carotenoid content
- increased sugar content
- increased amount of essential amino acids
- improved nutrient composition
- improved protein composition
- improved composition of fatty acids
- improved metabolite composition
- improved carotenoid composition
- improved sugar composition
- improved amino acids composition
- improved or optimal fruit color

- improved leaf color
- higher storage capacity
- higher processability of the harvested products.

Another indicator for the condition of the plant is the plant's tolerance or resistance to biotic and/or abiotic stress factors. Biotic and abiotic stress, especially over longer terms, can have harmful effects on plants. Biotic stress is caused by living organisms while abiotic stress is caused for example by environmental extremes. "Enhanced tolerance or resistance to biotic and/or abiotic stress factors" means (1.) that certain negative factors caused by biotic and/or abiotic stress are diminished in a measurable or noticeable amount as compared to plants exposed to the same conditions, but without being treated with a mixture according to the invention and (2.) that the negative effects are not diminished by a direct action of the mixture according to the invention on the stress factors, e.g. by its fungicidal or insecticidal action which directly destroys the microorganisms or pests, but rather by a stimulation of the plants' own defensive reactions against said stress factors.

Negative factors caused by biotic stress such as pathogens and pests are widely known and range from dotted leaves to total destruction of the plant. Biotic stress can be caused by living organisms, such as:

- pests (for example insects, arachnides, nematodes)
- competing plants (for example weeds)
- microorganisms such as phythopathogenic fungi and/or bacteria
- viruses.

Negative factors caused by abiotic stress are also well-known and can often be observed as reduced plant vigor (see above), for example: dotted leaves, "burned leaves", reduced growth, less flowers, less biomass, less crop yields, reduced nutritional value of the crops, later crop maturity, to give just a few examples. Abiotic stress can be caused for example by:

- extremes in temperature such as heat or cold (heat stress / cold stress)
- strong variations in temperature
- temperatures unusual for the specific season
- drought (drought stress)
- extreme wetness
- high salinity (salt stress)
- radiation (for example by increased UV radiation due to the decreasing ozone layer)
- increased ozone levels (ozone stress)
- organic pollution (for example by phythotoxic amounts of pesticides)
- inorganic pollution (for example by heavy metal contaminants).

As a result of biotic and/or abiotic stress factors, the quantity and the quality of the stressed plants, their crops and fruits decrease. As far as quality is concerned, reproductive development is usually severely affected with consequences on the crops which are important for fruits or seeds. Synthesis, accumulation and storage of proteins are mostly affected by temperature; growth is slowed by almost all types of stress; polysaccharide synthesis, both structural and storage is reduced or modified: these effects result in a decrease in biomass (yield) and in changes in the nutritional value of the product.

Advantageous properties, obtained especially from treated seeds, are e.g. improved germination and field establishment, better vigor and/or a more homogen field establishment.

As pointed out above, the above identified indicators for the health condition of a plant may be interdependent and may result from each other. For example, an increased resistance to biotic and/or abiotic stress may lead to a better plant vigor, e.g. to better and bigger crops, and thus to an increased yield. Inversely, a more developed root system may result in an increased resistance to biotic and/or abiotic stress. However, these interdependencies and interactions are neither all known nor fully understood and therefore the different indicators are described separately.

In one embodiment the use of the mixtures within the methods according to the disclosure results in an increased yield of a plant or its product.

In the context of the present disclosure, the application relates to the use of the mixtures within the methods resulting in an increased vigor of a plant or its product.

In another embodiment the use of the mixtures within the methods according to the disclosure results in an increased quality of a plant or its product.

In the context of the present disclosure, the application relates to the use of the mixtures within the methods resulting in an increased tolerance and/or resistance of a plant or its product against biotic and/or abiotic stress.

In the context of the present disclosure, the application relates to the enhancement of the tolerance and/or resistance against biotic stress factors. Thus, mixtures are used for stimulating the natural defensive reactions of a plant against a pathogen and/or a pest. As a consequence, the plant can be protected against unwanted microorganisms such as phytopathogenic fungi and/or bacteria or even viruses and/or against pests such as insects, arachnids and nematodes.

Thus mixtures are used for stimulating a plant's own defensive reactions against abiotic stress such as extremes in temperature, e.g. heat or cold or strong variations in temperature and/or temperatures unusual for the specific season, drought, extreme wetness, high salinity, radiation (e.g. increased UV radiation due to the decreasing ozone protective layer), increased ozone levels, organic pollution (e.g. by phythotoxic amounts of pesticides) and/or inorganic pollution (e.g. by heavy metal contaminants).

In one embodiment of the invention, the mixtures according to the invention are used for increasing the yield such as the plant weight and/or the plant biomass (e.g. overall fresh weight) and/or the grain yield and/or the number of tillers.

In the context of the present disclosure, the application also relates to mixtures used for improving the plant vigor such as the vitality of the plant and/or the plant development and/or the visual appearance and/or the plant stand (less plant verse/lodging) and/or enhancing root growth and/or improving the development of the root system and/or increasing the shoot growth and/or increasing the number of flowers per plant and/or increasing the yield of the crop when grown on poor soils or unfavorable climates and/or increased photosynthetic activity and/or enhancing the pigment content and/or increasing the chlorophyll content and/or increasing the stomatal conductance and/or improving the flowering (earlier flowering) and/or improving the germination and/or improving the stress tolerance and resistance of the plants against biotic and abiotic stress factors such as fungi, bacteria, viruses, insects, heat stress, cold stress, drought stress, UV stress and/or salt stress and/or decreasing the number of non-productive tillers and/or decreasing the number of dead basal leaves and/or increasing greenness of the leaves and/or reducing the input needed such as fertilizer and water and/or reducing the seed needed to establish the crop and/or improving the harvestability of the crop and/or improving the uniformity of ripening and/or improving the shelf life and/or delaying the senescence and/or strengthening the productive tillers and/or improving the quality of seeds in seed production and/or improving fruit color and/or improving leaf color and/or improving storage capacity and/or improving processability of the harvested product.

In another embodiment of the invention, the mixtures according to the invention are used for increasing the stomatal conductance. Higher stomatal conductance increases $CO_2$ diffusion into the leaf and favors higher photosynthetic rates. Higher photosynthetic rates in turn favor a higher biomass and higher crop yields. Recent studies of Pima cotton (*Gossypium barbadense*) and bread wheat (*Triticum aestivum*) have shown a positive correlation between yield increase and increases in stomatal conductance (Lu et al. (1998): Stomatal conductance predicts yields in irrigated Pima cotton and bread wheat grown at high temperatures. J. Exp. Bot. 49: 453-460).

In preferred further embodiment of the invention, the mixtures according to the invention are used for increasing the chlorophyll content. It is well known that chlorophyll content has a positive correlation with the plant's photosynthesis rate and accordingly, as pointed out above, to the plant's yield. The higher the chlorophyll content the higher the yield of a plant.

In the context of the present disclosure, the application also relates to mixtures used for increasing the plant weight and/or increasing the plant's biomass (e.g. overall fresh weight) and/or increasing the grain yield and/or increasing the number of tillers and/or improving the plant development and/or improving the visual appearance and/or improving the plant stand (less plant verse/lodging) and/or increasing the yield of the crop when grown on poor soils or unfavorable climates and/or improving the germination and/or improving the stress tolerance and resistance of the plants against abiotic stress factors such as cold stress, drought stress, UV stress and/or decreasing the number of non-productive tillers and/or decreasing the number of dead basal leaves and/or improving the greenness of the leaves and/or reducing the seed needed to establish the crop and/or improving the harvestability of the crop and/or improving the shelf life and/or delaying the senescence and/or strengthening the productive tillers and/or improving the quality of seeds in seed production.

It has to be emphasized that the above mentioned effects of the mixtures according to the invention, i.e. enhanced health of the plant, are also present when the plant is not under biotic stress and in particular when the plant is not under pest pressure. It is evident that a plant suffering from fungal or insecticidal attack produces a smaller biomass and leads to a reduced crop yield as compared to a plant which has been subjected to curative or preventive treatment against the pathogenic fungus or any other relevant pest and which can grow without the damage caused by the biotic stress factor. However, the methods according to the disclosure lead to an enhanced plant health even in the absence of any biotic stress. This means that the positive effects of the mixtures of the invention cannot be explained just by the fungicidal and/or herbicidal activities of the compounds (I), (II) and (III), but are based on further activity profiles. Accordingly, in a preferred embodiment of the method, the application of the active ingredients (components) and/or their mixtures is carried out in the absence of pest pressure. But of course, plants under biotic stress can be treated, too, according to the methods of the present disclosure.

The inventive mixtures are employed by treating the plant, plant propagation material (preferably seed), soil, area, material or environment in which a plant is growing or may grow with an effective amount of the active compounds. The application can be carried out in the absense of pest pressure and/or both before and after an infection of the materials, plants or plant propagation materials (preferably seeds) by pests.

In a preferred embodiment, the aerial plant parts are treated with a mixture according to the present disclosure. In the context of the present disclosure, the application relates to a method which comprises seed treatment with compound (II) and treatment of the soil, area, material or environment in which a plant is growing or may grow with compound (I) and optionally with compound (III).

In the context of the present disclosure, the application relates to a method which comprises seed treatment with compound (II) and foliar treatment of the plant with compound (I) and optionally with compound (III).

In the context of the present disclosure, the application relates to a method, where the plant, plant propagation material (preferably seed), soil, area, material or environment in which the plant is growing or may grow is treated with an effective amount of a mixture comprising compounds (I) and (II).

In the context of the present disclosure, the application relates to a method, where the plant, plant propagation material (preferably seed), soil, area, material or environment in which the plant is growing or may grow is treated with an effective amount of a mixture comprising compounds (I), (II) and (III).

In one embodiment of the invention, a mixture for increasing the health of a plant is applied at a growth stage (GS) between GS 00 and GS 65 BBCH of the treated plant. In a preferred embodiment of the invention, a mixture for increasing the health of a plant is applied at a growth stage (GS) between GS 00 and GS 55 BBCH of the treated plant.

In an even more preferred embodiment of the invention, a mixture for increasing the health of a plant is applied at a growth stage (GS) between GS 00 and GS 37 BBCH of the treated plant.

In a most preferred embodiment of the invention, a mixture for increasing the health of a plant is applied at a growth stage (GS) between GS 00 and GS 21 BBCH of the treated plant.

In a preferred embodiment of the invention, a mixture comprising compound (I) and (II) for increasing the health of a plant is applied at a growth stage (GS) between GS 13 and GS 37 BBCH of the treated plant.

In another preferred embodiment of the invention, a mixture comprising compound (I) and (II) and (III) for increasing the health of a plant is applied at a growth stage (GS) between GS 13 and GS 37 BBCH of the treated plant.

The term "growth stage" refers to the extended BBCH-scale which is a system for a uniform coding of phenologically similar growth stages of all mono- and dicotyledonous plant species in which the entire developmental cycle of the plants is subdivided into clearly recognizable and distinguishable longer-lasting developmental phases. The BBCH-scale uses a decimal code system, which is divided into principal and secondary growth stages. The abbreviation BBCH derives from the Federal Biological Research Centre for Agriculture and Forestry (Germany), the Bundessortenamt (Germany) and the chemical industry.

In a preferred embodiment of the invention, compound (I) is applied to the locus of growth where the plants of which the health is to be increased are growing or are intended to grow and/or as foliar treatment to such plants.

In another preferred embodiment of the invention, compound (II) is applied to the locus of growth where the plants of which the health is to be increased are growing or are intended to grow and/or as foliar treatment to such plants. In another preferred embodiment of the invention, compound (II) is applied as seed treatment.

In yet another preferred embodiment of the invention, compound (III) is applied to the locus of growth where the plants of which the health is to be increased are growing or are intended to grow and/or as foliar treatment to such plants.

Generally the term "plants" also includes plants which have been modified by breeding, mutagenesis or genetic engineering (transgenic and non-transgenic plants). Genetically modified plants are plants, which genetic material has been modified by the use of recombinant DNA techniques in a way that it cannot readily be obtained by cross breeding under natural circumstances, mutations or natural recombination.

Plants as well as the propagation material of said plants, which can be treated with the inventive mixtures include all modified non-transgenic plants or transgenic plants, e.g. crops which tolerate the action of herbicides or fungicides or insecticides owing to breeding, including genetic engineering methods, or plants which have modified characteristics in comparison with existing plants, which can be generated for example by traditional breeding methods and/or the generation of mutants, or by recombinant procedures.

In one embodiment of the method according to the disclosure, the plants and/or plant propagules are treated simultaneously (together or separately) or subsequently with a mixture as described above. Of course, the subsequent application is carried out with a time interval which allows a combined action of the applied compounds. Preferably, the time interval for a subsequent application of compound (I) and compound (II) and, in the case of ternary mixtures, one compound (III) ranges from a few seconds up to 3 months, preferably, from a few seconds up to 1 month, more preferably from a few seconds up to 2 weeks, even more preferably from a few seconds up to 3 days and in particular from 1 second up to 24 hours.

Herein, we have found that simultaneous, that is joint or separate, application of a compound (I) and a compound (II) or the successive application of a compound (I) and a compound (II) allows an enhanced increase of the health of a plant compared to the control rates that are possible with the individual compounds (synergistic mixtures).

In another embodiment of the invention, the mixture as described above is repeatedly applied. If this is the case, the application is repeated two to five times, preferably two times.

When used for increasing the health of a plant, the application rates of the mixtures are between 0,3 g/ha and 1500 g/ha, depending on various parameters such as the treated plant species or the mixture applied. In a preferred embodiment of the method according to the disclosure, the application rates of the mixtures are between 5 g/ha and 750 g/ha. In an even more preferred embodiment of the method according to the disclosure, the application rates of the mixtures are between 20 g/ha and 500 g/ha, in particular from 20 g/ha to 300 g/ha.

In the treatment of plant propagation material (preferably seed), amounts of from 0,01 g to 3 kg, in particular amounts from 0,01 g to 1 kg of mixtures according to the invention are generally required per 100 kg of plant propagation material (preferably seed). In a preferred embodiment of the method according to the disclosure, amounts of from 0,01 g to 250 g of mixtures according to the invention are required per 100 kg of plant propagation material (preferably seed). In another preferred embodiment of the method according to the disclosure, amounts of from 0,01 g to 150 g of mixtures according to the invention are required per 100 kg of plant.

As a matter of course, the mixtures according to the invention are used in "effective amounts". This means that they are used in a quantity which allows to obtain the desired effect which is a synergistic increase of the health of a plant but which does not give rise to any phytotoxic symptom on the treated plant.

The compounds according to the invention can be present in different crystal modifications whose biological activity may differ. They are likewise subject matter of the present invention.

In all binary mixtures used according to the methods of the present disclosure, compound (I) and compound (II) are employed in amounts which result in a synergistic effect.

With respect to binary mixtures, the weight ratio of compound (I) to compound (II) is 1:200 to 200:1, preferably from 100:1 to 1:100, more preferably from 50:1 to 1:50, more preferably from 20:1 to 1:20 and in particular from 10:1 to 1:10. The utmost preferred ratio is 1:5 to 5:1 or even 1:2 to 2:1.

In another preferred embodiment of the method according to the disclosure, ternary mixtures are applied. With respect to ternary mixtures, the weight ratio of compound (I) (= component 1) to compound (II) (= component 2) is preferably from 100:1 to 1:100, more preferably from 50:1 to 1:50, more preferably from 20:1 to 1:20 and in particular from 10:1 to 1:10. The utmost preferred ratio is 1:5 to 5:1. Within the ternary mixtures, the weight ratio of compound (I) (= component 1) to the further compound (III) (= component 3) is preferably from 100:1 to 1:100, more preferably from 50:1 to 1:50, more preferably from 20:1 to 1:20 and in particular from 10:1 to 1:10. The utmost preferred ratio is 1:5 to 5:1. Within the ternary mixtures, the weight ratio of compound (II) (= component 2) to the further compound (III) (= component 3) is preferably from 100:1 to 1:100, more preferably from 50:1 to 1:50, more preferably from 20:1 to 1:20 and in particular from 10:1 to 1:10. The utmost preferred ratio is 1:5 to 5:1.

All mixtures according to the invention are typically applied as compositions comprising compound (I) and compound (II) and optionally one compound (III). In a preferred embodiment, the pesticial composition for increasing the health of a plant comprises a liquid or solid carrier and a mixture as described above.

For example, mixtures according to the present invention can be applied (as seed treatment, foliar spray treatment, in-furrow application or by any other means) also to plants which have been modified by breeding, mutagenesis or genetic engineering including but not limiting to agricultural biotech products on the market or in development (cf. http://www.bio.org/speeches/pubs/er/agri_products.asp). Genetically modified plants are plants, which genetic material has been so modified by the use of recombinant DNA techniques that under natural circumstances cannot readily be obtained by cross breeding, mutations or natural recombination. Typically, one or more genes have been integrated into the genetic material of a genetically modified plant in order to improve certain properties of the plant. Such genetic modifications also include but are not limited to targeted post-transtional modification of protein(s), oligo- or polypeptides e.g. by glycosylation or polymer additions such as prenylated, acetylated or farnesylated moieties or PEG moieties.

Plants that have been modified by breeding, mutagenesis or genetic engineering, e.g. have been rendered tolerant to applications of specific classes of herbicides. Tolerance to herbicides can be obtained by creating insensitivity at the site of action of the herbicide by expression of a target enzyme which is resistant to herbicide; rapid metabolism (conjugation or degradation) of the herbicide by expression of enzymes which inactivate herbicide; or poor uptake and translocation of the herbicide. Examples are the expression of enzymes which are tolerant to the herbicide in comparison to wild type enzymes, such as the expression of 5-enolpyruvylshikimate-3-phosphate synthase (EPSPS), which is tolerant to glyphosate (see e.g. Heck et.al, Crop Sci. 45, 2005, 329-339; Funke et al., PNAS 103, 2006, 13010-13015; US5188642, US4940835, US5633435, US5804425, US5627061), the expression of glutamine synthase which is tolerant to glufosinate and bialaphos (see e.g. US5646024, US5561236) and DNA constructs coding for dicamba-degrading enzymes (see e.g. for general reference US 2009/0105077, and e.g. US7105724 for dicamba resistaince in bean, maize (for maize see also WO2008051633), cotton (for cotton see also US5670454), pea, potatoe, sorghum, soybean (for soybean see also US5670454), sunflower, tobacco, tomato (for tomato see also US5670454)). Gene constructs can be obtained, for example, from micro-organism or plants, which are tolerant to said herbicides, such as the Agrobacterium strain CP4 EPSPS which is resistant to glyphosate; Streptomyces bacteria which are resistance to glufosinate; Arabidopsis, *Daucus carota,* Pseudomonoas ssp. or *Zea mays* with chimeric gene sequences coging for HDDP (see e.g. WO1996/38567, WO 2004/55191); *Arabidopsis thaliana* which is resistant to protox inhibitors (see e.g. US2002/0073443).

Examples of commercial available plants with tolerance to herbicides, are the corn varieties "Roundup Ready® Corn", "Roundup Ready 2®" (Monsanto), "Agrisure GT®", "Agrisure GT/CB/LL®", "Agrisure GT/RW®", "Agrisure 3000GT®" (Syngenta), "YieldGard VT Rootworm/RR2®" and "YieldGard VT Triple®" (Monsanto) with tolerance to glyphosate; the corn varieties "Liberty Link®" (Bayer), "Herculex I®", "Herculex RW®", "Herculex Xtra"(Dow, Pioneer), "Agrisure GT/CB/LL®" and "Agrisure CB/LL/RW®" (Syngenta) with tolerance to glufosinate; the soybean varieties "Roundup Ready® Soybean" (Monsanto) and "Optimum GAT®" (DuPont, Pioneer) with tolerance to glyphosate; the cotton varieties "Roundup Ready® Cotton" and "Roundup Ready Flex®" (Monsanto) with tolerance to glyphosate; the cotton variety "FiberMax Liberty Link®" (Bayer) with tolerance to glufosinate; the cotton variety "BXN®" (Calgene) with tolerance to bromoxynil; the canola varieties "Navigator®" und "Compass®" (Rhone-Poulenc) with bromoxynil tolerance; the canola varierty"Roundup Ready® Canola" (Monsanto) with glyphosate tolerance; the canola variety "InVigor®" (Bayer) with glufosinate tolerance; the rice variety "Liberty Link® Rice" (Bayer) with glulfosinate tolerance and the alfalfa variety "Roundup Ready Alfalfa" with glyphosate tolerance. Further modified plants with herbicide are commonly known, for instance alfalfa, apple, eucalyptus, flax, grape, lentils, oil seed rape, peas, potato, rice, sugar beet, sunflower, tobacco, tomatom turf grass and wheat with tolerance to glyphosate (see e.g. US 5188642, US 4940835, US 5633435, US 5804425, US 5627061); beans, soybean, cotton, peas, potato, sunflower, tomato, tobacco, corn, sorghum and sugarcane with tolerance to dicamba (see e.g. US 2009/0105077, US 7105724 and US 5670454); pepper, apple, tomato, hirse, sunflower, tobacco, potato, corn, cucumber, wheat, soybean and sorghum with tolerance to 2,4-D (see e.g. US 6153401, US 6100446, WO 05/107437, US 5608147 and US 5670454); sugarbeet, potato, tomato and tobacco with tolerance to gluphosinate (see e.g. US 5646024, US 5561236); canola, barley, cotton, juncea, lettuce, lentils, melon, millet, oats, oilseed rapre, potato, rice, rye, sorghum, soybean, sugarbeet, sunflower, tobacco, tomato and wheat with tolerance to acetolactate synthase (ALS) inhibiting herbicides, such as triazolopyrimidine sulfonamides, growth inhibitors and imidazolinones (see e.g. US 5013659, WO 06/060634, US 4761373, US 5304732, US 6211438, US 6211439 and US 6222100); cereal, sugar cane, rice, corn, tobacco, soybean, cotton, rapeseed, sugar beet and potato with tolerance to HPPD inhibitor herbicides (see e.g. WO 04/055191, WO 96/38567, WO 97/049816 and US 6791014); wheat, soybean, cotton, sugar beet, rape, rice, corn, sorghum and sugar cane with tolerance to protoporphyrinogen oxidase (PPO) inhibitor herbicides (see e.g. US2002/0073443, US 20080052798, Pest Management Science, 61, 2005, 277-285). The methods of producing such herbicide resistant plants are generally known to the person skilled in the art and are described, for example, in the publications mentioned above. Further examples of commercial available modified plants with tolerance to herbicides "CLEARFIELD® Corn", "CLEARFIELD® Canola", "CLEARFIELD® Rice", "CLEARFIELD® Lentils", "CLEARFIELD® Sunlowers" (BASF) with tolerance to the imidazolinone herbicides.

Furthermore, plants are also covered that are by the use of recombinant DNA techniques capable to synthesize one or more insecticidal proteins, especially those known from the bacterial genus Bacillus, particularly from *Bacillus thuringiensis,* such as $\delta$-endotoxins, e.g. CryIA(b), CryIA(c), CryIF, CryIF(a2), CryIIA(b), CryIIIA, CryIIIB(b1) or Cry9c; vegetative insecticidal proteins (VIP), e.g. VIP1, VIP2, VIP3 or VIP3A; insecticidal proteins of bacteria colonizing nematodes, e.g. Photorhabdus spp. or Xenorhabdus spp.; toxins produced by animals, such as scorpion toxins, arachnid toxins, wasp toxins, or other insect-specific neurotoxins; toxins produced by fungi, such Streptomycetes toxins, plant lectins, such as pea or barley lectins; agglutinins; proteinase inhibitors, such as trypsin inhibitors, serine protease inhibitors, patatin, cystatin or papain inhibitors; ribosome-inactivating proteins (RIP), such as ricin, maize-RIP, abrin, luffin, saporin or bryodin; steroid metabolism enzymes, such as 3-hydroxysteroid oxidase, ecdysteroid-IDP-glycosyl-transferase, cholesterol oxidases, ecdysone inhibitors or HMG-CoA-reductase; ion channel blockers, such as blockers of sodium or calcium channels; juvenile hormone esterase; diuretic hormone receptors (helicokinin receptors); stilben synthase, bibenzyl synthase, chitinases or glucanases. In the context of the present invention these insecticidal proteins or toxins are to be understood expressly also as pre-toxins, hybrid proteins, truncated or otherwise modified proteins. Hybrid proteins are characterized by a new combination of protein domains, (see, e. g. WO 02/015701). Further examples of such toxins or genetically modified plants capable of synthesizing such toxins are disclosed, e.g., in EP-A 374 753, WO 93/007278, WO 95/34656, EP-A 427 529, EP-A 451 878, WO 03/18810 und WO 03/52073. The methods for producing such genetically modified plants are generally known to the person skilled in the art and are described, e. g. in the publications mentioned above. These insecticidal proteins contained in the genetically modified plants impart to the plants producing these proteins tolerance to harmful pests from all taxonomic groups of athropods, especially to beetles (Coeloptera), two-winged insects (Diptera), and moths (Lepidoptera) and to nematodes (Nematoda). Genetically modified plants capable to synthesize one or more insecticidal proteins are, e.g., described in the publications mentioned above, and some of which are commercially available such as YieldGard® (corn cultivars producing the Cry1Ab toxin), YieldGard® Plus (corn cultivars producing Cry1Ab and Cry3Bb1 toxins), Starlink® (corn cultivars producing the Cry9c toxin), Herculex® RW (corn cultivars producing Cry34Ab1, Cry35Ab1 and the enzyme Phosphinothricin-N-Acetyltransferase [PAT]); NuCOTN® 33B (cotton cultivars producing the Cry1Ac toxin), Bollgard® I (cotton cultivars producing the Cry1Ac toxin), Bollgard® II (cotton cultivars producing Cry1Ac and Cry2Ab2 toxins); VIPCOT® (cotton cultivars producing a VIP-toxin); NewLeaf® (potato cultivars producing the Cry3A toxin); Bt-Xtra®, NatureGard®, KnockOut®, BiteGard®, Protecta®, Bt11 (e. g. Agrisure® CB) and Bt176 from Syngenta Seeds SAS, France, (corn cultivars producing the Cry1Ab toxin and PAT enyzme), MIR604 from Syngenta Seeds SAS, France (corn cultivars producing a modified version of the Cry3A toxin, c.f. WO 03/018810), MON 863 from Monsanto Europe S.A., Belgium (corn cultivars producing the Cry3Bb1 toxin), IPC 531 from Monsanto Europe S.A., Belgium (cotton cultivars producing a modified version of the Cry1Ac toxin) and 1507 from Pioneer Overseas Corporation, Belgium (corn cultivars producing the Cry1F toxin and PAT enzyme).

Furthermore, plants are also covered that are by the use of recombinant DNA techniques capable to synthesize one or more proteins to increase the resistance or tolerance of those plants to bacterial, viral or fungal pathogens. Examples of such proteins are the so-called "pathogenesis-related proteins" (PR proteins, see, e.g. EP-A 392225), plant disease resistance genes (e.g. potato cultivars, which express resistance genes acting against Phytophthora infestans derived from the mexican wild potato Solanum bulbocastanum) or T4-lysozym (e.g. potato cultivars capable of synthesizing these proteins with increased resistance against bacteria such as *Erwinia amylvora*). The methods for producing such genetically modified plants are generally known to the person skilled in the art and are described, e.g. in the publications mentioned above.

Furthermore, plants are also covered that are by the use of recombinant DNA techniques capable to synthesize one or more proteins to increase the productivity (e.g. bio mass production, grain yield, starch content, oil content or protein content), tolerance to drought, salinity or other growth-limiting environmental factors or tolerance to pests and fungal, bacterial or viral pathogens of those plants.

Furthermore, plants are also covered that contain by the use of recombinant DNA techniques a modified amount of substances of content or new substances of content, specifically to improve human or animal nutrition, e.g. oil crops that produce health-promoting long-chain omega-3 fatty acids or unsaturated omega-9 fatty acids (e.g. Nexera® rape, DOW Agro Sciences, Canada).

Furthermore, plants are also covered that contain by the use of recombinant DNA techniques a modified amount of substances of content or new substances of content, specifically to improve raw material production, e.g. potatoes that produce increased amounts of amylopectin (e.g. Amflora® potato, BASF SE, Germany).

Particularly preferred modified plants suitable to be used in the methods of the present disclosure are those, which are rendered tolerant to herbicides, in particular tolerant to the herbicide dicamba, most preferably those dicamba resistant plants set forth above.

For use according to the present invention, the inventive mixtures can be converted into the customary formulations, for example solutions, emulsions, suspensions, dusts, powders, pastes and granules. The use form depends on the particular intended purpose; in each case, it should ensure a fine and even distribution of the mixtures according to the present invention. The formulations are prepared in a known manner (cf. US 3,060,084, EP-A 707 445 (for liquid concentrates), Browning: "Agglomeration", Chemical Engineering, Dec. 4, 1967, 147-48, Perry's Chemical Engineer's Handbook, 4th Ed., McGraw-Hill, New York, 1963, S. 8-57 und ff. WO 91/13546, US 4,172,714, US 4,144,050, US 3,920,442, US 5,180,587, US 5,232,701, US 5,208,030, GB 2,095,558, US 3,299,566, Klingman: Weed Control as a Science (J. Wiley & Sons, New York, 1961), Hance et al.: Weed Control Handbook (8th Ed., Blackwell Scientific, Oxford, 1989) and Mollet, H. and Grubemann, A.: Formulation Technology (Wiley VCH Verlag, Weinheim, 2001).

The agrochemical formulations may also comprise auxiliaries which are customary in agrochemical formulations. The auxiliaries used depend on the particular application form and active substance, respectively. Examples for suitable auxiliaries are solvents, solid carriers, dispersants or emulsifiers (such as further solubilizers, protective colloids, surfactants and adhesion agents), organic and anorganic thickeners, bactericides, anti-freezing agents, anti-foaming agents, if appropriate colorants and tackifiers or binders (e.g. for seed treatment formulations).

Suitable solvents are water, organic solvents such as mineral oil fractions of medium to high boiling point, such as kerosene or diesel oil, furthermore coal tar oils and oils of vegetable or animal origin, aliphatic, cyclic and aromatic hydrocarbons, e.g. toluene, xylene, paraffin, tetrahydronaphthalene, alkylated naphthalenes or their derivatives, alcohols such as methanol, ethanol, propanol, butanol and cyclohexanol, glycols, ketones such as cyclohexanone and gamma-butyrolactone, fatty acid dimethylamides, fatty acids and fatty acid esters and strongly polar solvents, e.g. amines such as N-methylpyrrolidone.

Solid carriers are mineral earths such as silicates, silica gels, talc, kaolins, limestone, lime, chalk, bole, loess, clays, dolomite, diatomaceous earth, calcium sulfate, magnesium sulfate, magnesium oxide, ground synthetic materials, fertilizers, such as, e.g. ammonium sulfate, ammonium phosphate, ammonium nitrate, ureas, and products of vegetable origin, such as cereal meal, tree bark meal, wood meal and nutshell meal, cellulose powders and other solid carriers.

Suitable surfactants (adjuvants, wetters, tackifiers, dispersants or emulsifiers) are alkali metal, alkaline earth metal and ammonium salts of aromatic sulfonic acids, such as ligninsoulfonic acid (Borresperse® types, Borregard, Norway) phenolsulfonic acid, naphthalenesulfonic acid (Morwet® types, Akzo Nobel, U.S.A.), dibutylnaphthalene-sulfonic acid (Nekal® types, BASF, Germany),and fatty acids, alkylsulfonates, alkylarylsulfonates, alkyl sulfates, laurylether sulfates, fatty alcohol sulfates, and sulfated hexa-, hepta- and octadecanolates, sulfated fatty alcohol glycol ethers, furthermore condensates of naphthalene or of naphthalenesulfonic acid with phenol and formaldehyde, polyoxy-ethylene octylphenyl ether, ethoxylated isooctylphenol, octylphenol, nonylphenol, alkylphenyl polyglycol ethers, tributylphenyl polyglycol ether, tristearyl-phenyl polyglycol ether, alkylaryl polyether alcohols, alcohol and fatty alcohol/ethylene oxide condensates, ethoxylated castor oil, polyoxyethylene alkyl ethers, ethoxylated polyoxypropylene, lauryl alcohol polyglycol ether acetal, sorbitol esters, lignin-sulfite waste liquid and proteins, denatured proteins, polysaccharides (e.g. methylcellulose), hydrophobically modified starches, polyvinyl alcohols (Mowiol® types, Clariant, Switzerland), polycarboxylates (Sokolan® types, BASF, Germany), polyalkoxylates, polyvinylamines (Lupasol® types, BASF, Germany), polyvinylpyrrolidone and the copolymers therof. Examples for thickeners (i.e. compounds that impart a modified flowability to formulations, i.e. high viscosity under static conditions and low viscosity during agitation) are polysaccharides and organic and anorganic clays such as Xanthan gum (Kelzan®, CP Kelco, U.S.A.), Rhodopol® 23 (Rhodia, France), Veegum® (R.T. Vanderbilt, U.S.A.) or Attaclay® (Engelhard Corp., NJ, USA).

Bactericides may be added for preservation and stabilization of the formulation. Examples for suitable bactericides are those based on dichlorophene and benzylalcohol hemi formal (Proxel® from ICI or Acticide® RS from Thor Chemie and Kathon® MK from Rohm & Haas) and isothiazolinone derivatives such as alkylisothiazolinones and benzisothiazolinones (Acticide® MBS from Thor Chemie). Examples for suitable anti-freezing agents are ethylene glycol, propylene glycol, urea and glycerin. Examples for anti-foaming agents are silicone emulsions (such as e.g. Silikon® SRE, Wacker, Germany or Rhodorsil®, Rhodia, France), long chain alcohols, fatty acids, salts of fatty acids, fluoroorganic compounds and mixtures thereof.

Suitable colorants are pigments of low water solubility and water-soluble dyes. Examples to be mentioned und the designations rhodamin B, C. I. pigment red 112, C. I. solvent red 1, pigment blue 15:4, pigment blue 15:3, pigment blue 15:2, pigment blue 15:1, pigment blue 80, pigment yellow 1, pigment yellow 13, pigment red 112, pigment red 48:2, pigment red 48:1, pigment red 57:1, pigment red 53:1, pigment orange 43, pigment orange 34, pigment orange 5, pigment green 36, pigment green 7, pigment white 6, pigment brown 25, basic violet 10, basic violet 49, acid red 51, acid red 52, acid red 14, acid blue 9, acid yellow 23, basic red 10, basic red 108.

Examples for tackifiers or binders are polyvinylpyrrolidons, polyvinylacetates, polyvinyl alcohols and cellulose ethers (Tylose®, Shin-Etsu, Japan).

Powders, materials for spreading and dusts can be prepared by mixing or concomitantly grinding the compounds (I) and/or (II) and/or (III) and, if appropriate, further active substances, with at least one solid carrier.

Granules, e.g. coated granules, impregnated granules and homogeneous granules, can be prepared by binding the active substances to solid carriers. Examples of solid carriers are mineral earths such as silica gels, silicates, talc, kaolin, attaclay, limestone, lime, chalk, bole, loess, clay, dolomite, diatomaceous earth, calcium sulfate, magnesium sulfate, magnesium oxide, ground synthetic materials, fertilizers, such as, e.g., ammonium sulfate, ammonium phosphate, ammonium nitrate, ureas, and products of vegetable origin, such as cereal meal, tree bark meal, wood meal and nutshell meal, cellulose powders and other solid carriers.

Examples for formulation types are:

1. Composition types for dilution with water

i) Water-soluble concentrates (SL, LS)

10 parts by weight of compounds of the inventive mixtures are dissolved in 90 parts by weight of water or in a water-soluble solvent. As an alternative, wetting agents or other auxiliaries are added. The active substance dissolves upon dilution with water. In this way, a formulation having a content of 10% by weight of active substance is obtained.

ii) Dispersible concentrates (DC)

20 parts by weight of compounds of the inventive mixtures are dissolved in 70 parts by weight of cyclohexanone with addition of 10 parts by weight of a dispersant, e. g. polyvinylpyrrolidone. Dilution with water gives a dispersion. The active substance content is 20% by weight.

iii) Emulsifiable concentrates (EC)

15 parts by weight of compounds of the inventive mixtures are dissolved in 75 parts by weight of xylene with addition of calcium dodecylbenzenesulfonate and castor oil ethoxylate (in each case 5 parts by weight). Dilution with water gives an emulsion. The composition has an active substance content of 15% by weight.

iv) Emulsions (EW, EO, ES)

25 parts by weight of compounds of the inventive mixtures are dissolved in 35 parts by weight of xylene with addition of calcium dodecylbenzenesulfonate and castor oil ethoxylate (in each case 5 parts by weight). This mixture is introduced into 30 parts by weight of water by means of an emulsifying machine (Ultraturrax) and made into a homogeneous emulsion. Dilution with water gives an emulsion. The composition has an active substance content of 25% by weight.

v) Suspensions (SC, OD, FS)

In an agitated ball mill, 20 parts by weight of compounds of the inventive mixtures are comminuted with addition of 10 parts by weight of dispersants and wetting agents and 70 parts by weight of water or an organic solvent to give a fine active substance suspension. Dilution with water gives a stable suspension of the active substance. The active substance content in the composition is 20% by weight.

vi) Water-dispersible granules and water-soluble granules (WG, SG)

50 parts by weight of compounds of the inventive mixtures are ground finely with addition of 50 parts by weight of dispersants and wetting agents and prepared as water-dispersible or water-soluble granules by means of technical appliances (e. g. extrusion, spray tower, fluidized bed). Dilution with water gives a stable dispersion or solution of the active substance. The composition has an active substance content of 50% by weight.

vii) Water-dispersible powders and water-soluble powders (WP, SP, SS, WS)

75 parts by weight of compounds of the inventive mixtures are ground in a rotor-stator mill with addition of 25 parts by weight of dispersants, wetting agents and silica gel. Dilution with water gives a stable dispersion or solution of the active substance. The active substance content of the composition is 75% by weight.

viii) Gel (GF)

In an agitated ball mill, 20 parts by weight of compounds of the inventive mixtures are comminuted with addition of 10 parts by weight of dispersants, 1 part by weight of a gelling agent wetters and 70 parts by weight of water or of an organic solvent to give a fine suspension of the active substance. Dilution with water gives a stable suspension of the active substance, whereby a composition with 20% (w/w) of active substance is obtained.

2. Composition types to be applied undiluted

ix) Dustable powders (DP, DS)

5 parts by weight of compounds of the inventive mixtures are ground finely and mixed intimately with 95 parts by weight of finely divided kaolin. This gives a dustable composition having an active substance content of 5% by weight.

x) Granules (GR, FG, GG, MG)

0.5 parts by weight of compounds of the inventive mixtures is ground finely and associated with 99.5 parts by weight of carriers. Current methods are extrusion, spray-drying or the fluidized bed. This gives granules to be applied undiluted having an active substance content of 0.5% by weight.

xi) ULV solutions (UL)

10 parts by weight of compounds of the inventive mixtures are dissolved in 90 parts by weight of an organic solvent, e. g. xylene. This gives a composition to be applied undiluted having an active substance content of 10% by weight.
The agrochemical formulations generally comprise between 0.01 and 95%, preferably between 0.1 and 90%, most preferably between 0.5 and 90%, by weight of active substances. The compounds of the inventive mixtures are employed in a purity of from 90% to 100%, preferably from 95% to 100% (according to NMR spectrum).
The compounds of the inventive mixtures can be used as such or in the form of their compositions, e.g. in the form of directly sprayable solutions, powders, suspensions, dispersions, emulsions, oil dispersions, pastes, dustable products, materials for spreading, or granules, by means of spraying, atomizing, dusting, spreading, brushing, immersing or pouring. The application forms depend entirely on the intended purposes; it is intended to ensure in each case the finest possible distribution of the compounds present in the inventive mixtures.

Aqueous application forms can be prepared from emulsion concentrates, pastes or wettable powders (sprayable powders, oil dispersions) by adding water. To prepare emulsions, pastes or oil dispersions, the substances, as such or dissolved in an oil or solvent, can be homogenized in water by means of a wetter, tackifier, dispersant or emulsifier. Alternatively, it is possible to prepare concentrates composed of active substance, wetter, tackifier, dispersant or emulsifier and, if appropriate, solvent or oil, and such concentrates are suitable for dilution with water.

The active substance concentrations in the ready-to-use preparations can be varied within relatively wide ranges. In general, they are from 0.0001 to 10%, preferably from 0.001 to 1% by weight of compounds of the inventive mixtures.

The compounds of the inventive mixtures may also be used successfully in the ultra-low-volume process (ULV), it being possible to apply compositions comprising over 95% by weight of active substance, or even to apply the active substance without additives.

Various types of oils, wetters, adjuvants, herbicides, fungicides, other pesticides, or bactericides may be added to the active compounds, if appropriate not until immediately prior to use (tank mix). These agents can be admixed with the compounds of the inventive mixtures in a weight ratio of 1:100 to 100:1, preferably 1:10 to 10:1.

Compositions of this invention may also contain fertilizers such as ammonium nitrate, urea, potash, and superphosphate, phytotoxicants and plant growth regulators and safeners. These may be used sequentially or in combination with the above-described compositions, if appropriate also added only immediately prior to use (tank mix). For example, the plant(s) may be sprayed with a composition of this invention either before or after being treated with the fertilizers.

The compounds contained in the mixtures as defined above can be applied simultaneously, that is jointly or separately, or in succession, the sequence, in the case of separate application, generally not having any effect on the result of the control measures.

According to one embodiment of this invention, applying the compound (I) and compound (II) and, in the case of ternary mixtures, compound (III) is to be understood to denote, that at least the compound (I) and compound (II) and, in the case of ternary mixtures, compound (III) occur simultaneously at the site of action (i.e. plant, plant propagation material (preferably seed), soil, area, material or environment in which a plant is growing or may grow) in a effective amount.

This can be obtained by applying the compound (I) and compound (II) and, in the case of ternary mixtures, compound (III) simultaneously, either jointly (e.g. as tank-mix) or seperately, or in succession, wherein the time interval between the individual applications is selected to ensure that the active substance applied first still occurs at the site of action in a sufficient amount at the time of application of the further active substance(s). The order of application is not essential for working of the present invention.

In the inventive mixtures, the weight ratio of the compounds generally depends from the properties of the compounds of the inventive mixtures.

The compounds of the inventive mixtures can be used individually or already partially or completely mixed with one another to prepare the composition according to the invention. It is also possible for them to be packaged and used further as combination composition such as a kit of parts.

In the context of the disclosure, the kits may include one or more, including all, components that may be used to prepare a subject agrochemical composition. E.g., kits may include the compound (I) and compound (II) and, in the case of ternary mixtures, compound (III) and/or an adjuvant component and/or a further pesticidal compound (e.g. insecticide, fungicide or herbicide) and/or a growth regulator component). One or more of the components may already be combined together or pre-formulated. In those embodiments where more than two components are provided in a kit, the components may already be combined together and as such are packaged in a single container such as a vial, bottle, can, pouch, bag or canister. In other embodiments, two or more components of a kit may be packaged separately, i.e., not pre-formulated. As such, kits may include one or more separate containers such as vials, cans, bottles, pouches, bags or canisters, each container containing a separate component for an agrochemical composition. In both forms, a component of the kit may be applied separately from or together with the further components or as a component of a combination composition according to the invention for preparing the composition according to the invention.

The user applies the composition according to the invention usually from a predosage device, a knapsack sprayer, a spray tank or a spray plane. Here, the agrochemical composition is made up with water and/or buffer to the desired application concentration, it being possible, if appropriate, to add further auxiliaries, and the ready-to-use spray liquid or the agrochemical composition according to the invention is thus obtained. Usually, 50 to 500 liters of the ready-to-use spray liquid are applied per hectare of agricultural useful area, preferably 50 to 400 liters.

According to one embodiment, individual compounds of the inventive mixtures formulated as composition (or formulation) such as parts of a kit or parts of the inventive mixture may be mixed by the user himself in a spray tank and further auxiliaries may be added, if appropriate (tank mix).

In a further embodiment, either individual compounds of the inventive mixtures formulated as composition or partially premixed components, e.g. components comprising the compound (I) and compound (II) and, in the case of ternary mixtures, compound (III) may be mixed by the user in a spray tank and further auxiliaries and additives may be added, if appropriate (tank mix).

In a further embodiment, either individual components of the composition according to the invention or partially premixed components, e.g. components comprising the compound (I) and compound (II) and, in the case of ternary mixtures, compound (III), can be applied jointly (e.g. after tankmix) or consecutively.

The term "effective amount" denotes an amount of the inventive mixtures, which is sufficient for achieving the synergistic plant health effects, in particular the yield effects as defined herein. More exemplary information about amounts, ways of application and suitable ratios to be used is given below. Anyway, the skilled artisan is well aware of the fact that such an amount can vary in a broad range and is dependent on various factors, e.g. the treated cultivated plant or material and the climatic conditions.

When preparing the mixtures, it is preferred to employ the pure active compounds, to which further active compounds against pests, such as insecticides, herbicides, fungicides or else herbicidal or growth-regulating active compounds or fertilizers can be added as further active components according to need.

The inventive mixtures are employed by treating the plant, plant propagation material (preferably seed), soil, area, material or environment in which a plant is growing or may grow with an effective amount of the active compounds.

Principally, the application rates of the inventive mixtures are from 0,3 g/ha to 2000 g/ha, preferably 5 g/ha to 2000 g/ha, more preferably from 50 to 900 g/ha, in particular from 50 to 900 g/ha.

When using glyphosate, the application rates are in the range of from 0,1 to 6,0 kg of active ingredient (acid equivalent) per hectare, depending on various parameters such as the weather conditions and the plant species.

As mentioned above, a variant of the present invention also comprises seed treatment with compound (II) followed by foliar spraying with compound (I) and optionally compound (III).

Seed treatment can be made into the seedbox before planting into the field.

For seed treatment purposes, the weight ratio in the binary or ternary mixtures of the present invention generally depends on the properties of the compounds of the inventive mixtures.

Compositions, which are especially useful for seed treatment are e.g.:

A    Soluble concentrates (SL, LS)
D    Emulsions (EW, EO, ES)
E    Suspensions (SC, OD, FS)
F    Water-dispersible granules and water-soluble granules (WG, SG)
G    Water-dispersible powders and water-soluble powders (WP, SP, WS)
H    Gel-formulations (GF)
I    Dustable powders (DP, DS)

These compositions can be applied to plant propagation materials, particularly seeds, diluted or undiluted. The compositions in question give, after two-to-tenfold dilution, active substance concentrations of from 0.01 to 60% by weight, preferably from 0.1 to 40% by weight, in the ready-to-use preparations. Application can be carried out before or during sowing. Methods for applying or treating agrochemical compounds and compositions thereof, respectively, on to plant propagation material, especially seeds, are known in the art, and include dressing, coating, pelleting, dusting and soaking application methods of the propagation material (and also in furrow treatment). In a preferred embodiment, the compounds or the compositions thereof, respectively, are applied on to the plant propagation material by a method such that germination is not induced, e. g. by seed dressing, pelleting, coating and dusting. In the treatment of plant propagation material (preferably seed), the application rates of the inventive mixture are generally for the formulated product (which usually comprises from10 to 750 g/l of the active(s)).

The present disclosure also relates to the propagation products of plants, and especially the seed comprising, that is, coated with and/or containing, a mixture as defined above or a composition containing the mixture of two or more active ingredients or a mixture of two or more compositions each providing one of the active ingredients. The plant propagation material (preferably seed) comprises the inventive mixtures in an amount of from 0.01 g to 10 kg per 100 kg of plant propagation material (preferably seed). The separate or joint application of the compounds of the inventive mixtures is carried out by spraying or dusting the seeds, the seedlings, the plants or the soils before or after sowing of the plants or before or after emergence of the plants.

The following examples are intended to illustrate the invention.

**Examples**

Example 1

The effect of dicamba as an example for compound (I), pyraclostrobin as an example for compound (II) and the respective mixture comprising both compounds on the growth of cotyledons, as one indicator of a plant's health, was evaluated. Cucumbers were sown and germinated in the dark at 25°C for 4 days. Subsequently, 20 cotyledons per treatment were cut and placed in a Petri dish containing 20 ml of the treatment solution.The active ingredients were dissolved in 0.5% DMSO and diluted to the concentrations given in table 1. Control cotyledons were treated with the 0.5% DMSO solution. Following the incubation in the dark at 25°C for 3 days the cotyledons were weight and the fresh biomass recorded (table 1). Only those cotyledons were used for the measurement which did not show any macerating reaction.

The efficacy of the tested compounds was calculated as % of biomass increase compared to the control:

$$E = (a/b-1) \cdot 100$$

a    corresponds to the biomass (mg) of the treated cotyledons after incubation;
b    corresponds to the biomass (mg) of untreated cotyledons after incubation (control).

An efficacy of 0 means the biomass in the treated cotyledons corresponds to that of the untreated control; an efficacy of 100 means the treated plants showed an increase in biomass of 100%.

The expected efficacies of the combinations of the active ingredients were estimated using Colby's formula (Colby, S.R., Calculating synergistic and antagonistic responses of herbicide combinations, Weeds, 15, pp. 20-22, 1967) and compared with the observed efficacies.

$$\text{Colby's formula: } E = x + y - x \cdot y/100$$

E    expected efficacy, expressed in % of the untreated control, when using the mixture comprising the compounds A and B at the concentrations a and b;
x    efficacy, expressed in % of the untreated control, when using compound A at the concentration a;
y    efficacy, expressed in % of the untreated control, when using compound B at the concentration b.

Table 1: Biomass of cotyledons treated or not treated with pyraclstrobin, dicamba or a mixture comprising both compounds

| Treatment | Mean cotyledon biomass (mg) | Observed efficacy (%) | Expected efficacy (%) | Synergism (%) |
|---|---|---|---|---|
| 0,5 % DMSO (Control) | 70,4 | | | |
| Pyraclostrobin (2 ppm) | 67,7 | - 3,9 | | |
| Dicamba (1,25 ppm) | 69,9 | - 0,8 | | |
| Pyraclostrobin (2 ppm) + dicamba (1,25 ppm) | 102,0 | 44,8 | - 4,7* | 49,5 |
| *according to the Colby's formula | | | | |

As can be seen in table 1, there was no growth stimulation of the cotyledons by either pyraclostrobin or dicamba when applied alone. However, a strong increase in cotyledon growth resulting in an increased biomass (overall fresh weight) was surprisingly observed when pyraclostrobin and dicamba were applied as a mixture according to the invention. The observed efficacy in growth stimulation was much higher compared to the expected efficacy, as can be seen in table 1. Evidently, the mixture of pyraclostrobin and dicamba can be used for synergistically increasing the health of a plant according to the invention.

**Claims**

1. The use of a mixture comprising, as active compounds
a herbicide being dicamba (compound I) and a fungicide being pyraclostrobin (compound II), or
a herbicide being quinmerac (compound I) and a fungicide being pyraclostrobin (compound II)
for synergistically increasing the health of a plant for increased yield and/or the quality of a plant or its product.

2. The use according to claim 1, wherein the mixture additionally comprises a second herbicide (compound III) selected from glyphosate and glufosinate.

3. The use according to claim 2, wherein compound (III) is glyphosphate.

4. The use according to any one of claims 1 to 3, wherein the plant is selected from soybean, corn, cotton, canola, sugar cane, barley, oats, sorghum and wheat.

5. The use according to any one of claims 1 to 4, wherein the plant is a herbicide tolerant plant.

6. The use according to claim 5, wherein the plant is a dicamba and/or glyphosate and/or glufosinate tolerant plant.

**Patentansprüche**

1. Verwendung einer Mischung, die als Wirkstoffe Folgendes umfasst:

ein Herbizid, bei dem es sich um Dicamba (Verbindung I) handelt, und ein Fungizid, bei dem es sich um Pyraclostrobin (Verbindung II) handelt, oder
ein Herbizid, bei dem es sich um Quinmerac (Verbindung I) handelt, und ein Fungizid, bei dem es sich um Pyraclostrobin (Verbindung II) handelt,
zum synergistischen Erhöhen der Gesundheit einer Pflanze für erhöhten Ertrag und/oder die Qualität einer Pflanze oder ihres Produkts.

2. Verwendung nach Anspruch 1, wobei die Mischung zusätzlich ein zweites Herbizid (Verbindung III), ausgewählt aus Glyphosat und Glufosinat, umfasst.

3. Verwendung nach Anspruch 2, wobei es sich bei der Verbindung (III) um Glyphosphat handelt.

4. Verwendung nach einem der Ansprüche 1 bis 3, wobei die Pflanze aus Sojabohne, Mais, Baumwolle, Canola, Zuckerrohr, Gerste, Hafer, Sorghum und Weizen ausgewählt ist.

5. Verwendung nach einem der Ansprüche 1 bis 4, wobei es sich bei der Pflanze um eine herbizidtolerante Pflanze handelt.

6. Verwendung nach Anspruch 5, wobei es sich bei der Pflanze um eine dicamba- und/oder glyphosat-und/oder glufosinattolerante Pflanze handelt.

**Revendications**

1. Utilisation d'un mélange comprenant, comme composés actifs,
un herbicide qui est le dicamba (composé I) et un fongicide qui est la pyraclostrobine (composé II), ou
un herbicide qui est le quinmérac (composé I) et un fongicide qui est la pyraclostrobine (composé II),
afin d'améliorer de manière synergique la santé d'une plante pour un rendement accru et/ou la qualité d'une plante ou de son produit.

2. Utilisation selon la revendication 1, dans laquelle le mélange comprend en outre un deuxième herbicide (composé III) choisi parmi le glyphosate et le glufosinate.

3. Utilisation selon la revendication 2, dans laquelle le composé (III) est le glyphosphate.

**4.** Utilisation selon l'une quelconque des revendications 1 à 3, dans laquelle la plante est choisie parmi le soja, le maïs, le coton, le colza, la canne à sucre, l'orge, l'avoine, le sorgho et le blé.

**5.** Utilisation selon l'une quelconque des revendications 1 à 4, dans laquelle la plante est une plante tolérante vis-à-vis des herbicides.

**6.** Utilisation selon la revendication 5, dans laquelle la plante est une plante tolérante vis-à-vis du dicamba et/ou du glyphosate et/ou du glufosinate.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 218571 A
- EP 293358 A
- WO 9200377 A
- WO 9204449 A
- WO 199736488 A
- US 3988142 A
- WO 199841094 A
- WO 20041043150 A
- US 2006111239 A
- WO 2008048964 A
- US 20090105077 A
- WO 2009098188 A
- WO 2009126462 A
- US 5188642 A
- US 4940835 A
- US 5633435 A
- US 5804425 A
- US 5627061 A
- US 5646024 A
- US 5561236 A
- US 7105724 B
- WO 2008051633 A
- US 5670454 A
- WO 199638567 A
- WO 200455191 A
- US 20020073443 A
- US 6153401 A
- US 6100446 A
- WO 05107437 A
- US 5608147 A
- US 5013659 A
- WO 06060634 A
- US 4761373 A
- US 5304732 A
- US 6211438 B
- US 6211439 B
- US 6222100 B
- WO 04055191 A
- WO 9638567 A
- WO 97049816 A
- US 6791014 B
- US 20080052798 A
- WO 02015701 A
- EP 374753 A
- WO 93007278 A
- WO 9534656 A
- EP 427529 A
- EP 451878 A
- WO 0318810 A
- WO 0352073 A
- WO 03018810 A
- EP 392225 A
- US 3060084 A
- EP 707445 A
- WO 9113546 A
- US 4172714 A
- US 4144050 A
- US 3920442 A
- US 5180587 A
- US 5232701 A
- US 5208030 A
- GB 2095558 A
- US 3299566 A

**Non-patent literature cited in the description**

- *Chemical Abstracts,* 1995, vol. 123 (21
- **KOEHLE H. et al.** *Gesunde Pflanzen,* 1997, vol. 49, 267-271
- **GLAAB J. et al.** *Planta,* 1999, vol. 207, 442-448
- **LANCASTER et al.** *Weed Technology,* 2005, vol. 19, 451-455
- The Pesticide Manual. British Crop Protection Council, 2006
- **LU et al.** Stomatal conductance predicts yields in irrigated Pima cotton and bread wheat grown at high temperatures. *J. Exp. Bot.,* 1998, vol. 49, 453-460
- **HECK.** *Crop Sci.,* 2005, vol. 45, 329-339
- **FUNKE et al.** *PNAS,* 2006, vol. 103, 13010-13015
- *Pest Management Science,* 2005, vol. 61, 277-285
- **BROWNING.** Chemical Engineering. *Agglomeration,* 04 December 1967, 147-48
- Perry's Chemical Engineer's Handbook. McGraw-Hill, 1963, 8-57
- **KLINGMAN.** Weed Control as a Science. J. Wiley & Sons, 1961
- **HANCE et al.** Weed Control Handbook. Blackwell Scientific, 1989

- **MOLLET, H. ; GRUBEMANN, A.** Formulation Technology. Wiley VCH Verlag, 2001

- **COLBY, S.R.** Calculating synergistic and antagonistic responses of herbicide combinations. *Weeds,* 1967, vol. 15, 20-22